# EUROPÄISCHE PATENTSCHRIFT

(11) **EP 2 982 526 B1**
(45) Veröffentlichungstag und Bekanntmachung des Hinweises auf die Patenterteilung: **22.02.2017**
(21) Anmeldenummer: 15000980.1
(22) Anmeldetag: 07.04.2015
(51) Int. Cl.: B60G 7/00, B60G 9/02, B60G 11/30

(54) **VIERPUNKTLENKER**
FOUR POINT LINK
BIELLE À QUATRE POINTS

(30) Priorität: 09.08.2014 DE 102014011860
(43) Veröffentlichungstag der Anmeldung: 10.02.2016
(73) Patentinhaber: MAN Truck & Bus AG, 80995 München (DE)
(72) Erfinder: Ziehlke, Jürgen, 85416 Langenbach (DE); Mendler, Hardy, 85221 Dachau (DE); Grötzinger, Josef, 84032 Landshut (DE); Marchal, Arnaud, 85276 Pfaffenhofen (DE); Meyer Tuve, Harald, 85247 Schwabhausen (DE)
(74) Vertreter: v. Bezold & Partner Patentanwälte - PartG mbB

(56) Entgegenhaltungen:
- WO-A1-99/58354
- WO-A1-2006/067551
- DE-A1- 1 780 082
- DE-A1-102014 207 773
- DE-C1- 3 412 578
- FR-A- 768 876
- JP-A- H0 399 915
- JP-A- H11 139 129
- US-A- 5 711 544
- US-A1- 2004 188 973

## Beschreibung

Die Erfindung betrifft einen Vierpunktlenker zur Anbindung einer Fahrzeugstarrachse an einem Fahrzeugrahmen eines Fahrzeugs, insbesondere eines Nutzfahrzeugs, mit vier durch einen Zentralbereich fest miteinander verbundenen und sich von dem Zentralbereich wegerstreckenden Lenkerarmen, von denen zwei erste Lenkerarme an dem Fahrzeugrahmen und zwei zweite Lenkerarme an der Fahrzeugachse anlenkbar sind.

Aus der EP 0 776 275 B1 ist eine Achsaufhängung für Starrachsen in Fahrzeugen bekannt, wobei die Fahrzeugachse durch Längslenker und einen Vierpunktlenker mit dem Fahrzeugaufbau verbunden ist. An den Armenden des als X-förmiges Kreuz ausgebildeten Vierpunktlenkers sind Gelenke für die Befestigung an der Karosserie und Gelenke für die Befestigung an der Fahrzeugachse angeordnet. Das Querschnittsprofil der Arme kann doppel-T-förmig sein oder aus einem Hohlprofil bestehen.

Die DE 10 2004 014 610 A1 beschreibt einen eine X-förmige Gestalt aufweisenden Vierpunktlenker zur Achsaufhängung einer Starrachse eines Nutzfahrzeugs, mit einem zentralen, hohlen Gehäusebereich und vier an dem Gehäusebereich angeformten Lenkerarmen, an deren äußeren Enden mit Kugelgelenken bzw. Elastomergelenken versehene Lageraugen angeformt sind. Das Hohlgehäuse des Vierpunktlenkers weist eine beidseitig offene, rohrförmige Gestalt auf und ist an allen vier Seiten tailliert. Ferner weisen die Lenkerarme einen U-förmigen bzw. C-förmigen Querschnitt auf und gehen fließend in den zentralen, rohrförmigen Gehäusebereich über. Das Hohlgehäuse ist als Blechformteil oder als Gussteil ausbildbar, wobei der Vierpunktlenker z. B. aus bainitischem Gusseisen besteht.

Derartige Vierpunktlenker können neben der Fahrzeuglängs- und Fahrzeugquerführung auch die Aufgabe der Fahrzeugstabilisierung übernehmen. Die Höhe der Stabilisierungskraft hängt überwiegend von der Gestaltung des Vierpunktlenkers ab. Ferner bestimmt der Vierpunktlenker auch die Steifigkeit des Fahrwerks um die Vertikalachse. Um die Vierpunktlenker aus Bauraumgründen möglichst kompakt und aus Kostengründen möglichst mit geringem Gewicht auszuführen, weisen die aus dem Stand der Technik bekannten Vierpunktlenker Hohlprofile und/oder Querschnittsprofile auf.

Kommt es im Fahrbetrieb des Fahrzeugs jedoch zu einer Überlastung des Vierpunktlenkers, kann ein Bruch des Vierpunktlenkers auftreten, so dass eine Längsführung des Fahrzeugs mit dem Vierpunktlenker möglicherweise nicht mehr möglich ist, was aus Fahrsicherheitsgründen zu vermeiden ist.

Es ist somit eine Aufgabe der Erfindung, einen verbesserten Vierpunktlenker bereitzustellen, mit dem Nachteile herkömmlicher Vierpunktlenker vermieden werden können. Die Aufgabe der Erfindung ist es insbesondere, einen Vierpunktlenker bereitzustellen, der kostengünstig herstellbar ist, der sich durch eine kompakte und leichte Bauweise auszeichnet und dennoch eine sichere Fahrzeugführung auch in Überlastsituationen sicherstellen kann.

Diese Aufgaben werden durch einen Vierpunktlenker mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Der erfindungsgemäße Vierpunktlenker zur Anbindung einer Fahrzeugstarrachse an einem Fahrzeugrahmen, insbesondere an einem Fahrzeugrahmen eines Nutzfahrzeugs, weist in Übereinstimmung mit dem Stand der Technik vier durch einen Zentralbereich fest miteinander verbundene und sich von dem Zentralbereich wegerstreckende Lenkerarme auf, von denen zwei erste Lenkerarme an dem Fahrzeugrahmen und zwei zweite Lenkerarme an der Fahrzeugachse anlenkbar sind. Die vier Lenkerarme können sich von dem Zentralbereich unter Ausbildung eines Kreuzes oder einer H-förmigen Struktur wegerstrecken.

Gemäß allgemeinen Gesichtspunkten der Erfindung ist der Vierpunktlenker dadurch gekennzeichnet, dass am Zentralbereich eine Sollversagungsstelle vorgesehen ist.

Gemäß einer besonders vorteilhaften Ausführungsform ist die Sollversagungsstelle als Sollbruchstelle ausgebildet.

Das Vorsehen der Sollversagungsstelle bzw. der Sollbruchstelle am Zentralbereich bietet den besonderen Vorteil, dass der Vierpunktlenker bei Auftreten einer Überlastung, die auf den Vierpunktlenker einwirkt, im Zentralbereich versagt, beispielsweise bricht, und nicht an den Lenkerarmen, so dass auch in Überlastsituationen und insbesondere bei einem Bruch des Vierpunktlenkers die sicherheitskritische Längsführung des Fahrzeugs stets sichergestellt werden kann. Dadurch kann auch bei einem Bruch des Vierpunktlenkers ein Notlaufbetrieb (sog. Limp-Home-Betrieb) gewährleistet werden.

Ein weiterer Vorzug der Erfindung liegt darin, dass durch Vorsehen einer definierten Versagungsstelle der Vierpunktlenker insgesamt mit geringerem Gewicht und weniger Materialaufwand und somit leichter und kostengünstiger ausgelegt werden kann.

Ist die Sollversagungsstelle eine Sollbruchstelle, ist der Zentralbereich an der Sollbruchstelle somit so auszulegen, dass bei Überschreiten eines vorgegebenen Schwellwerts einer auf den Vierpunktlenker von außen einwirkenden Kraft der Zentralbereich an der vorgegebenen Sollbruchstelle bricht, um zu verhindern, dass durch die Überlastung einer der Lenkerarme bricht. Der Schwellwert ist so zu wählen, dass er kleiner als ein Wert ist, an dem ein Lenkerarm brechen kann. Der Schwellwert ist abhängig von der spezifischen Formgebung, Herstellung und Materialbeschaffenheit des Vierpunktlenkers und kann beispielsweise experimentell bestimmt werden.

Unter einer Sollversagungsstelle des Zentralbereichs kann aber allgemein auch verstanden werden, dass sich bei Überschreiten eines vorgegebenen Schwellwerts einer von außen auf den Vierpunktlenker einwirkenden Kraft eine Fahrzeugstabilisierungsfunktion und/oder Fahrzeugquerführungsfunktion des Vierpunktlenkers verschlechtert, ohne dass der Zentralbereich bricht, was nachfolgend noch detaillierter an Ausführungsbeispielen erläutert wird.

Gemäß einer bevorzugten Ausgestaltungsform kann der Zentralbereich als Mittelteil ausgeführt sein, an dessen Enden je ein Schenkel im Wesentlichen senkrecht zum Mittelteil drehfest angeordnet ist, wobei ein erster Abschnitt der Schenkel jeweils durch einen der ersten Lenkerarme und ein zweiter Abschnitt der Schenkel jeweils durch einen der zweiten Lenkerarme gebildet werden. Die Schenkel können gerade sein oder auch einen gekrümmten oder geschwungenen Verlauf aufweisen.

Der Vierpunktlenker, insbesondere der Zentralbereich bzw. das Mittelteil, ist verwindbar ausgeführt zur Ausbildung einer Stabilisierungseinrichtung, die seitlichen Wank- und Kippbewegungen durch Torsionsspannungen entgegenwirkt.

Beispielsweise kann das Mittelteil stabförmig, zylinderförmig, stangenförmig, rohrförmig und/oder als Profilstück ausgeführt sein.

Eine derartige Ausgestaltung des Mittelteils erleichtert das zuverlässige Einbringen einer Sollversagungsstelle. Beispielsweise kann in den Zentralbereich bzw. in das Mittelteil mindestens eine Kerbe zur Ausbildung der Sollbruchstelle eingebracht sein. Ferner kann in den Zentralbereich bzw. in das Mittelteil alternativ oder zusätzlich eine Stelle erhöhter Materialspannung beim Fertigen eingebracht sein, so dass die Stelle erhöhter Materialspannung die Sollbruchstelle ausbildet.

Ferner kann der Zentralbereich aus einem Kunststoff oder zumindest teilweise aus einem Kunststoff gefertigt sein, wobei der Kunststoff vorzugsweise ein glasfaser- oder kohlenstofffaserverstärkter Kunststoff ist. Gemäß dieser Variante sind die Lenkerarme aus Gusseisen oder Schmiedestahl gefertigt. Der Kunststoff ist dabei so zu wählen, dass er weniger stabil als das Material der Lenkerarme ist, so dass bei einer Überlastung ein Bruch zuerst am Mittelteil bzw. Zentralbereich auftritt.

Gemäß einer weiteren Variante kann das Mittelteil aus zwei Teilen bestehen, die an einer Verbindungsstelle drehfest miteinander verbunden sind, wobei zur Ausbildung der Sollversagungsstelle an der Verbindungsstelle die Verbindung zwischen den beiden Teilen so ausgelegt ist, dass eine Überschreitung eines vorgegebenen Schwellwerts einer auf die Verbindungsstelle einwirkende Krafteinwirkung eine Verdrehung der beiden Teile des Mittelteils bewirkt.

Ein Vorzug dieser Ausführungsvariante liegt somit darin, dass bei einer Überlastung der Vierpunktlenker nicht bricht, sondern sich lediglich die Teile des Mittelteils gegeneinander verdrehen, so dass zwar das im Normalbetrieb bereitgestellte Rückstelltorsionsmoment zur Wankstabilisierung nicht mehr bereitgestellt werden kann, aber dennoch die Längsführung des Fahrzeugs gewährleistet wird. Hierbei können die auftretenden Kräfte der beiden Bauteilhälften des Mittelteils durch alle gängigen Verfahren zur drehfesten Verbindung zweier Bauteile bereitgestellt werden, beispielsweise durch Ausbildung einer reibschlüssigen Verbindung, z. B. mit Klemmschrauben, einem Formschluss, z. B. durch Passschrauben, Bolzen zur Übertragung der Scherkräfte, einer Verzahnung, einer Nietverbindung, Verrasterung oder durch Adhäsion/Kohäsion (Kleben).

Eine besonders vorteilhafte Variante dieser Ausgestaltungsform sieht vor, dass die zwei Teile des Mittelteils jeweils eine Flanschfläche aufweisen, die mit einer Niet- oder Schraubverbindung drehfest verbunden sind, wobei die Stärke der Schrauben oder Nieten so ausgelegt sind, dass sie bei einer Überschreitung des Schwellwerts versagen.

Die vorgenannten Ausführungsvarianten sind somit ein Beispiel für eine Sollversagungsstelle, die nicht als Sollbruchstelle ausgebildet ist, sondern wobei lediglich die Torsionseigenschaften des Mittelteils beeinflusst werden.

Eine weitere Möglichkeit der erfindungsgemäßen Realisierung sieht vor, dass die Lenkerarme so ausgeführt sind, dass eine im montierten Zustand des Vierpunktlenkers der Fahrbahn zugewandte Seite der Lenkerarme eine bessere schlagdämpfende Eigenschaft aufweist als eine der Fahrbahn abgewandte Seite der Lenkerarme. Diese Ausführungsvariante basiert auf der Feststellung der Erfinder, dass ein Bruch des Vierpunktlenkers nicht nur durch eine Überlastung durch Scherkräfte etc. auftreten kann, sondern auch durch Steinschlag oder andere von der Fahrbahn im Fahrbetrieb hochgeschleuderte Gegenstände. Das Vorsehen der der Fahrbahn zugewandten Seite der Lenkerarme mit einer verbesserten dämpfenden Eigenschaft kann somit die Widerstandsfähigkeit der Lenkerarme gegen solche Schäden verbessern und die Sicherheit des Vierpunktlenkers insgesamt erhöhen.

Bei einer vorteilhaften Variante dieser Ausgestaltungsform ist die der Fahrbahn zugewandte Seite der Lenkerarme mit einer Gummibeschichtung versehen. Ferner kann die der Fahrbahn zugewandte Seite der Lenkerarme aus einem Material mit höherer Duktilität als die der Fahrbahn abgewandte Seite gebildet sein, beispielsweise durch Ausbildung der Unterseite der Lenkerarme mit einem duktilen Stahl.

Der Vierpunktlenker kann mehrteilig ausgeführt sein. Beispielsweise kann das Mittelteil stoffschlüssig mit den Lenkerarmen verbunden sein, vorzugsweise durch Kleben oder Schweißen.

Eine weitere Möglichkeit der erfindungsgemäßen Realisierung sieht vor, dass das Mittelteil über eine formschlüssige Verbindung, vorzugsweise eine Verzahnung, mit den Lenkerarmen verbunden ist, wobei die formschlüssige Verbindung zusätzlich über eine Niet- oder Schraubverbindung gesichert ist. Dadurch kann eine besonders feste lösbare Verbindung realisiert werden.

Bei dieser Variante kann auch die Verzahnung oder die Niet- oder Schraubverbindung so ausgelegt werden, dass diese bei Überschreiten des vorgegebenen Schwellwertes bricht oder versagt. Ferner besteht wiederum die Möglichkeit, in das Mittelteil mindestens eine Kerbe zur Ausbildung der Sollbruchstelle einzubringen und/oder eine Stelle erhöhter Materialspannung bei der Herstellung einzubringen, so dass die Stelle erhöhter Materialspannung die Sollbruchstelle ausbildet.

Die vorgenannten mehrteiligen Ausführungsvarianten bieten ferner den Vorteil, dass zur Herstellung der einzelnen Bestandteile des Vierpunktlenkers kleinere Werkzeuge verwendet werden können, wodurch ein kostengünstiger Herstellungsprozess ermöglicht wird. Ferner wird die Handhabung der Bauteile erleichtert.

Alternativ besteht im Rahmen der Erfindung die Möglichkeit, dass das Mittelteil endseitig einstückig mit den entsprechenden Lenkerarmen verbunden ist, was eine besonders feste Verbindung des Mittelteils an die Lenkerarme ermöglicht.

Im Rahmen der Erfindung besteht ferner die Möglichkeit, dass der Vierpunktlenker einteilig ausgeführt ist.

Hierbei kann in einer ersten Variante das Mittelteil als geschlossenes Rohr ausgeführt sein und die Lenkerarme ein zur Seite hin offenes Profil aufweisen. Das zur Seite hin offene Profil kann beispielsweise aus zwei parallel verlaufenden Kanten gebildet sein. Das ausgebildete Mittelteil ermöglicht eine besonders leichte Bauweise des Vierpunktlenkers.

Ferner kann das Mittelteil und die Lenkerarme aus Vollmaterial gebildet sein, was eine besonders hohe Stabilität ermöglicht. In einer Variante dieser Ausgestaltungsform kann das aus Vollmaterial gebildete Mittelteil ferner hohlgebohrt sein, um eine Gewichtsreduktion zu ermöglichen. Diese Ausführungsvariante bietet den Vorteil, dass der Vierpunktlenker geschmiedet werden kann, während ein als geschlossenes Rohr ausgeführtes Mittelteil ein Gießverfahren zur Herstellung erfordert, falls als Material Stahl oder Gusseisen verwendet wird.

Ferner können am Mittelteil des Vierpunktlenkers Kernstützausnehmungen vorgesehen sein, um den Gussfertigungsprozess sicherer auszugestalten.

In einer weiteren Variante kann das Mittelteil eine nach unten und/oder oben offene Profilstruktur aufweisen. Eine nach unten offene Profilstruktur ist eine im montierten Zustand des Vierpunktlenkers zur Fahrbahnseite hin offene Profilstruktur. Ein derartiges Mittelteil bietet eine besonders hohe Stabilität bei gleichzeitig leichter Bauweise.

Die Erfindung betrifft ferner eine Achsaufhängung für eine Starrachse, insbesondere eine gelenkte Starrachse in Fahrzeugen, insbesondere in Nutzfahrzeugen, mit einem Vierpunktlenker gemäß einem der vorhergehenden Aspekte.

Die Lageraufnahmen des Vierpunktlenkers können versteift ausgeführt sein.

Es sei betont, dass die zuvor beschriebenen Ausführungsvarianten der Vierpunktlenker auch ohne Sollversagungsstelle im Zentralbereich bzw. Mittelteil ausgeführt sein können, falls das Vorsehen eines Sollbruchbereichs oder Sollversagungsbereichs nicht erforderlich oder nicht gewünscht ist. Derartige Varianten der Vierpunktlenker sollen demnach auch als offenbart gelten und beanspruchbar sein.

Die Erfindung betrifft ferner ein Fahrzeug, insbesondere ein Nutzfahrzeug, mit einer solchen Achsaufhängung oder mit einem Vierpunktlenker, wie zuvor beschrieben.

Weitere Einzelheiten und Vorteile der Erfindung werden im Folgenden unter Bezug auf die beigefügten Zeichnungen beschrieben. Es zeigen:
Figur 1 eine perspektivische Ansicht eines Vierpunktlenkers gemäß einem Ausführungsbeispiel;
Figur 2 eine perspektivische Ansicht eines Vierpunktlenkers gemäß einem Ausführungsbeispiel;
Figuren 3 und 4 eine perspektivische Ansicht und eine Seitenschnittansicht eines Vierpunktlenkers gemäß einem Ausführungsbeispiel;
Figuren 5A bis 9 verschiedene einteilig ausgeführte Ausführungsvarianten des Vierpunktlenkers; und
Figuren 10 bis 12C verschiedene mehrteilig ausgeführte Ausführungsvarianten des Vierpunktlenkers.

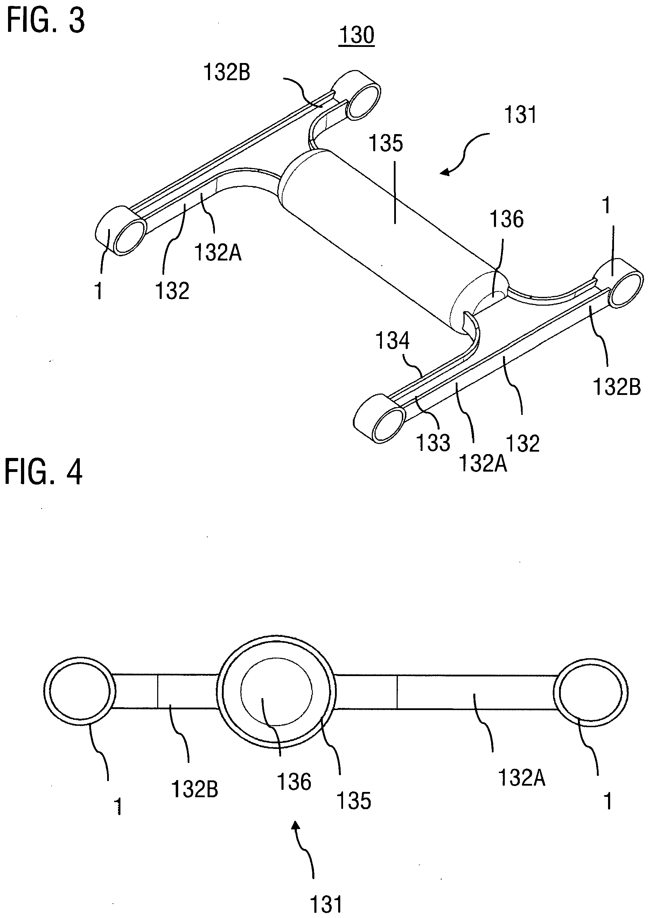

Figur 3 zeigt eine Ausführungsvariante 30 des Vierpunktlenkers. Der einteilig ausgeführte Vierpunktlenker 30 umfasst ein im montierten Zustand senkrecht zur Längsrichtung des Fahrzeugs angeordnetes Mittelteil 31, das mit einem offenen Profilquerschnitt versehen ist und an dem endseitig einstückig die beiden Schenkel 32 des Vierpunktlenkers angeordnet sind, wobei jeder Schenkel 32 aus einem ersten Lenkerarm 32A und einem zweiten Lenkerarm 32B besteht.

An den Schenkeln endseitig angeformt, z. B. angeschweißt, sind jeweils die hohlzylinderförmigen Lageraugen 1 mit eingepressten Lagern mit seitlichen Pratzen 2 zur kardanischen Lagerung des Vierpunktlenkers an der Achsaufhängung bzw. dem Fahrzeugrahmen. Die Lenkerarme 32A und 32B haben einen H-förmigen bzw. doppelt-U-förmigen Profilquerschnitt mit den Seitenkanten 33, 34. Der Profilquerschnitt des Mittelteils 31 ist nach oben und unten hin offen und weist einzelne in Längsrichtung verlaufende Profilstege 38 auf, die das Mittelteil in einzelne rechteckförmige Profilvertiefungen 39 unterteilen. Der Profilquerschnitt des Mittelteils 31 weist ferner zwei diagonal verlaufende Profilstege 37 auf, die die rechteckförmigen Profilvertiefungen 39 durchqueren und sich mittig treffen. Ferner ist das Mittelteil 30 zu den Schenkeln 32 hin mit leicht abnehmender Dicke ausgebildet, so dass die Dicke in der Mitte 35 größer ist als am Endbereich 36 des Mittelteils 31.

Ein besonderer Vorzug dieses Vierpunktlenkers 30 liegt darin, dass das offene Bauteilprofil besonders leicht gieß- oder schmiedbar ist.

In dem Mittelteil ist eine Sollbruchstelle vorgesehen. Der Bereich, in dem die Sollbruchstelle angeordnet werden kann, ist durch den mit "Z" markierten Bereich in Figur 3 dargestellt. Die Sollbruchstelle kann durch eine Einkerbung (nicht gezeigt) und/oder einen Bereich erhöhter Materialspannung ausgebildet sein. Dabei ist der Mittelteil so ausgeführt, dass der Mittelteil bei einer Überlastung an der Sollbruchstelle bricht, so dass eine Längsführung des Fahrzeugs weiter gegeben ist. Alternativ kann beim Bruch des Vierpunktlenkers die Quersteifigkeit über Drahtseile oder ähnliches gewährleistet werden.

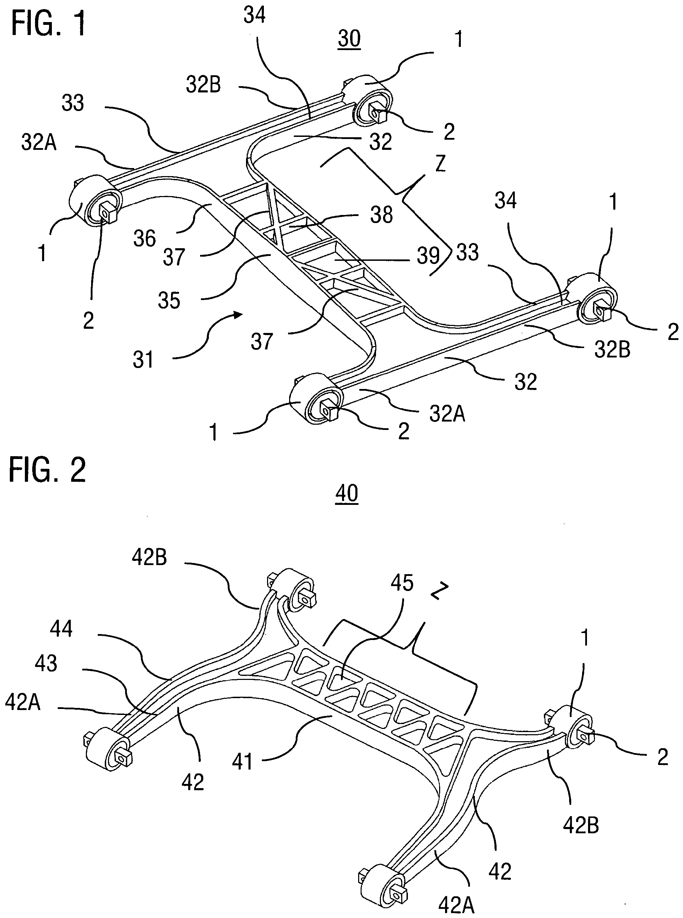

Figur 2 zeigt eine weitere Ausführungsvariante 40 des Vierpunktlenkers. Eine Besonderheit dieses Ausführungsbeispiels liegt darin, dass das Mittelteil 41 mit einer dreieckförmigen Profilstruktur 45 versehen ist. Die dreieckförmige Profilstruktur kann vorteilhafterweise aus einer in Querrichtung verlaufenden Anordnung von dreieckförmigen Vertiefungen gebildet sein, wobei benachbarte Vertiefungen in Längsrichtung versetzt und um 180° Grad angeordnet sind. Ferner sind die Schenkel 42 bzw. die Lenkerarme 42A und 42B im Wesentlichen senkrecht zum Mittelteil angeordnet, jedoch leicht gekrümmt bzw. geschwungen ausgeführt, derart, dass die Lenkerarme an ihrem achsseitigen und rahmenseitigen Endbereich weiter in Querrichtung vom Mittelteil 41 entfernt sind als ihr Endbereich am Mittelteil. Die Lenkerarme 42A und 42B haben ebenfalls einen H-förmigen bzw. doppelt-U-förmigen Profilquerschnitt mit den Seitenkanten 43, 44.

Die Ausführungsvariante 40 eignet sich besonders gut für eine Herstellung im Schmiedeverfahren. In dem Mittelteil ist wiederum eine Sollbruchstelle vorgesehen. Der Bereich, in dem die Sollbruchstelle angeordnet werden kann, ist durch den mit "Z" markierten Bereich dargestellt. Die Sollbruchstelle kann durch eine Einkerbung (nicht gezeigt) und/oder einen Bereich erhöhter Materialspannung ausgebildet sein, wie zuvor beschrieben.

Figur 3 zeigt eine weitere Ausführungsvariante 130 des Vierpunktlenkers. Die Besonderheit dieser Ausführungsvariante ist die Ausgestaltung des Mittelteils 131 als geschlossener Hohlraum 135 (geschlossener Profilquerschnitt). Der geschlossene Hohlraum 135 kann beispielsweise als Speicherraum für Druckluft oder andere Fluide herangezogen werden. Durch den Einsatz von Druckluft oder anderen Fluiden können die physikalischen Eigenschaften des Fahrwerks mit Vierpunktlenkern gezielt beeinflusst werden (Eigenfrequenz, aktive Wankstabilisierung, Steifigkeiten, usw.). In der schematischen Darstellung der Figur 13A sind die Anschlüsse zur Druckluftversorgung nicht dargestellt. Die Schenkel 132 bzw. Lenkerarme 132A und 132B sind wiederum als Gusseisen- oder Schmiedestahlteile mit einem H-förmigen Profilquerschnitt ausgebildet. Der geschlossene Hohlzylinder 135 kann beispielsweise an den Anschlussbereich 136 an die Schenkel 132 angeschweißt sein. Die Sollbruchstelle ist am Hohlraum 135 und an dem Anschlussbereich 136 ausgebildet.

Figur 4 zeigt das Ausführungsbeispiel 130 der Figur 3 nochmals in einer seitlichen Schnittansicht.

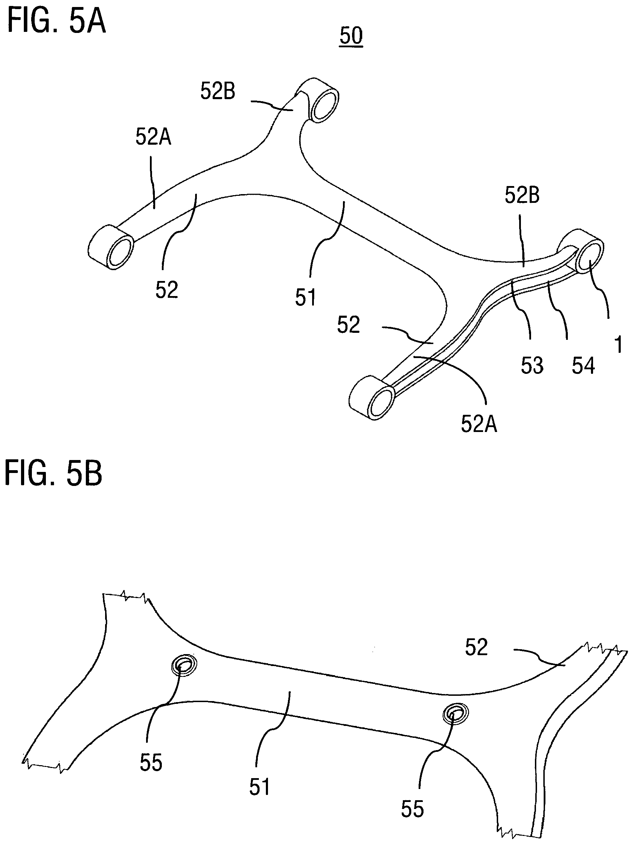

Figur 5A zeigt eine weitere Ausführungsvariante 50 des Vierpunktlenkers mit einem geschlossenen rohrförmigen Mittelteil 51 und einem zur Seite hin offenem Profil der Schenkel 52. Hierbei sind die Schenkel wiederum senkrecht am Mittelteil 51 einstückig befestigt und weisen einen leicht gekrümmten bzw. geschwungenen Verlauf auf. Das zur Seite hin offene Profil wird durch zwei parallele in vertikaler Richtung versetzte Kanten 53, 54 gebildet.

Figur 5B zeigt eine weitere Ausführungsvariante 50 des Vierpunktlenkers der Figur 5A in einer vergrößerten Darstellung des Mittelteils 51, bei dem zusätzlich sogenannte Kernstützen 55 im Endbereich des Mittelteils vorgesehen sind. Die Kernstützen 55 dienen dazu, den Gussfertigungsprozess sicherer zu gestalten und resultieren von den positiven Halterungsbolzen der Gussformen. Die Lage und Anordnung der Kernstützen 55 richtet sich nach den Anforderungen der Bauteilfunktion und -festigkeit. Im vorliegenden Beispiel sind die Kernstützen 55 an der Unterseite des Vierpunktlenkers 50 angeordnet, können jedoch auch beidseitig angebracht sein. Die Kernstützen können mit anderen Funktionsbauteilen wieder verschlossen werden, z. B. mit Druckluftanschlüssen.

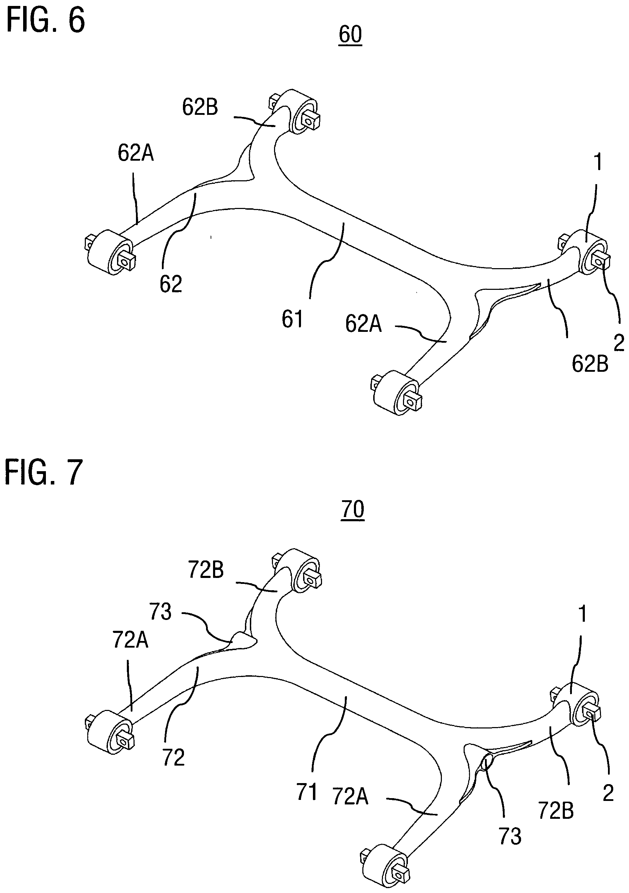

Figur 6 zeigt ein weiteres Ausführungsbeispiel 60 des Vierpunktlenkers, bei dem das Mittelteil 61 und die Schenkel 62 bzw. Lenkerarme 62A, 62B aus Vollmaterial, d. h. ohne Hohlquerschnitt, ausgebildet sind. Ein derartiger Vierpunktlenker wird typischerweise geschmiedet.

Figur 7 zeigt eine Abwandlung 70 dieses Ausführungsbeispiels. Die Besonderheit dieses Ausführungsbeispiels besteht darin, dass der Vierpunktlenker der Figur 6 nachträglich hohlgebohrt wurde, so dass das Mittelteil 71 einen durchgehenden Hohlraum 73 umfasst. Die Schenkel 72 bzw. Lenkerarme 72A und 72B entsprechen dem Ausführungsbeispiel der Figur 6.

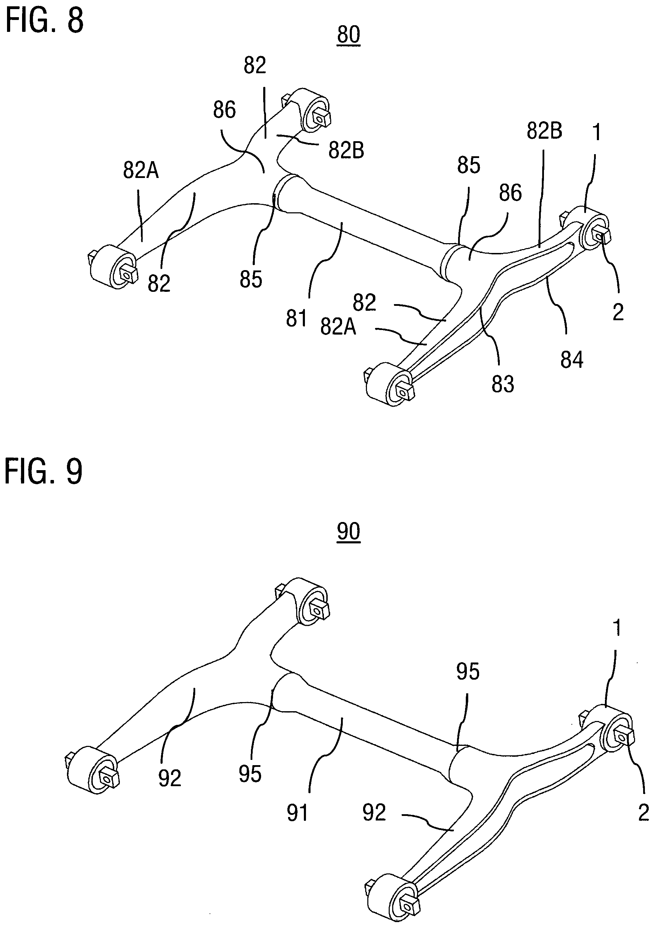

Mehrteilig ausgeführte Ausführungsbeispiele des Vierpunktlenkers sind nachfolgend in den Figuren 8 bis 13B beschrieben.

Figur 8 zeigt eine Ausführungsvariante 80 eines Vierpunktlenkers, wobei die Schenkel 82, bzw. Lenkerarme 82A, 82B beispielsweise den Schenkeln 52 der Figur 5A entsprechen. Die Schenkel sind jedoch nicht einstückig mit dem Mitteilteil 81 ausgeführt, sondern das hohlzylinderförmige Mittelteil 81 wird nachträglich stoffschlüssig durch Schweißen an der Verbindungsstelle 85 mit den Schenkeln 82 verbunden. Hierzu sind die Schenkel 82 mit einem sich in Querrichtung erstreckenden zylindrischen Anschlussbereich 86 versehen. Die Seitenteile 182 bestehen hierzu aus verschweißbarem Material (Gusseisen oder Schmiedestahl). Die Anschweißstelle wird gemäß den schweißtechnischen Anforderungen vorbereitet. Die Ausführungsform des Mittelteils richtet sich nach den Anforderungen der Schweißnaht, beispielsweise geeignete Schweißnahtvorbereitung, Durchmesservergrößerung zur Spannungsabsenkung an den Schweißnähten, etc..

Dadurch können für die Herstellung der einzelnen Teile des Vierpunktlenkers kleinere Werkzeuge verwendet werden, was die Herstellungskosten reduziert.

Eine weitere Variante 90 des Vierpunktlenkers ist in Figur 9 dargestellt, wobei im Unterschied zu Figur 8 nun das Mittelteil 91 an der Verbindungsstelle 95 mit den Schenkeln 92 stoffschlüssig durch Kleben verbunden ist. Dies ist besonders vorteilhaft, falls das Mittelteil 91 beispielsweise aus einem leichten Kunststoff, wie beispielsweise GFK oder CFK, ausgeführt ist.

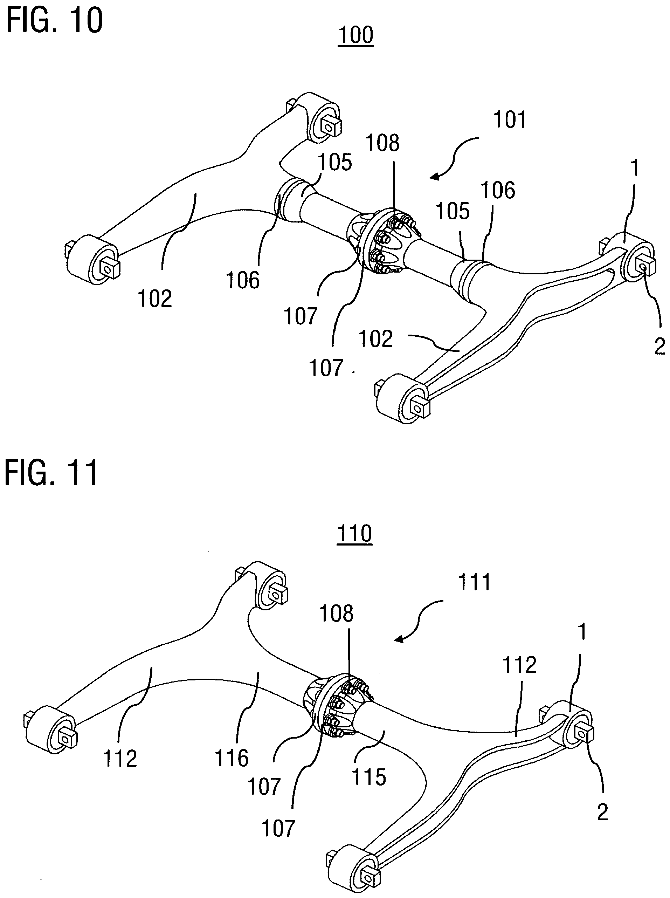

Figur 10 zeigt eine weitere Ausführungsvariante 100 des Vierpunktlenkers, bei dem das Mittelteil 101 aus zwei Teilen besteht, die mittig an einer Flanschfläche 107 mittels Schrauben 108 verschraubt sind. Die Verbindung der beiden Teile des Mittelteils 101 mit den jeweiligen Schenkeln 102 erfolgt stoffschlüssig, beispielsweise durch Schweißen an dem Bereich 106. Um den kleineren Durchmesser der Mittelteile an den größeren Durchmesser des Anschlussstücks der Schenkel anzupassen, weisen die beiden Teile des Mittelteils 101 an ihrem den Schenkeln 102 zugewandtem Endbereich eine Durchmesservergrößerung 105 zur Spannungsabsenkung an den Schweißnähten auf.

Figur 11 zeigt eine weitere Ausführungsvariante 110, bei der das Mittelteil 111 wiederum über eine Flanschverschraubung 107, 108 mittig verbunden ist. Im Unterschied zu dem vorherigen Ausführungsbeispiel sind die beiden Teile 115, 116 des Mittelteils 111 einstückig mit den Schenkeln 112 des Vierpunktlenkers verbunden.

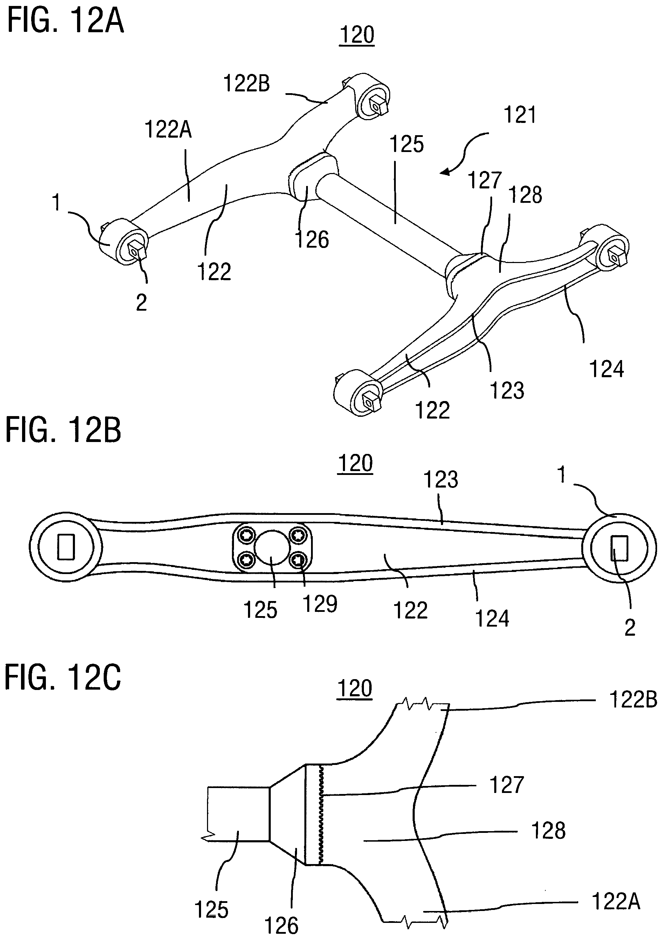

In den Figuren 12A bis 12C ist eine weitere Ausführungsvariante 120 des Vierpunktlenkers gezeigt. Die Besonderheit dieses Ausführungsbeispiels liegt darin, dass das Mittelteil 121 eine hohlzylinderförmige Stange 125 umfasst, die über eine formschlüssige Verbindung in Form einer Verzahnung 127 mit dem Anschlussbereich 128 der Schenkel 122 verbunden ist. Die formschlüssige Verbindung ist zusätzlich über eine Niet- oder Schraubverbindung gesichert. Dies ist in der Seitenansicht 12B gezeigt, die die Sicherungsschrauben 129 an der Innenseite des Hohlprofils der Schenkel 122 zeigen. Zur Kosteneinsparung werden vorzugsweise Durchgangslöcher mit einer Schrauben-Mutter-Verbindung 129 verwendet.

Das Hohlprofil besteht wiederum aus einem U-förmigen Querschnitt mit den äußeren Kanten 123, 124. Ein besonderer Vorzug dieser Ausführungsvariante ist das besonders vorteilhafte Leichtbaupotential. Figur 12C zeigt in einem Ausschnitt den formschlüssigen Verbindungsbereich 127 zwischen dem Mittelteil 125 und den Schenkeln 122. Das Mittelteil 121 verfügt endseitig wieder über einen Durchmesservergrößerungsbereich 126 zur Anpassung an den Verbindungsquerschnitt 128 der Schenkel 122.

Bei den zuvor anhand der Figuren 5A bis 12C beschriebenen Ausführungsvarianten kann die Sollbruchstelle im Mittelteil durch eine Einkerbung (nicht gezeigt) und/oder einen Bereich erhöhter Materialspannung ausgebildet sein, wie zuvor beschrieben.

Bei den Varianten, bei denen das Mittelteil nicht einteilig mit den Lenkerarmen (Figuren 8, 9 und 10), sondern z. B. stoffschlüssig (verschweisst oder verklebt) oder formschlüssig mit Schraub- oder Nietverbindung (Figuren 12A-12C) verbunden ist, kann die Sollversagungsstelle auch durch entsprechende "schwächere" Ausbildung der Verbindungsstelle zwischen Mittelteil und der Lenkerarme ausgebildet sein, so dass die Verbindungstelle bei Überschreiten eines vorgegebenen Kraftschwellwerts bricht bzw. versagt.

Bei der in den Figuren 10 und 11 beschriebenen Varianten ist die die Stärke der Schrauben oder Nieten so ausgelegt sind, dass sie bei einer Überschreitung des Schwellwerts versagen, so dass sich bei Überschreiten des Schwellwerts die beiden Hälften des Mittelteils gegeneinander verdrehen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, um eine bestimmte Situation oder ein bestimmtes Material an die Lehre der Erfindung anzupassen, ohne den zugehörigen Bereich zu verlassen.

So können je nach Ausführungsvariante des Vierpunktlenkers unterschiedliche Fertigungsverfahren zum Einsatz kommen, beispielsweise Gieß- und Schmiedetechnik, Sintern, Laser-3D-Druck, mechanische Bearbeitung, etc.. Insbesondere können neben Gusseisen und Stahl auch allgemeine Legierungen, Schmiedestahl, faserverstärkter Kunststoff oder Komposit-werkstoffe zum Einsatz kommen. Grundsätzlich können die auftretenden Kräfte der beiden Bauteilhälften mit unterschiedlichen aus dem Stand der Technik bekannten Verbindungsme-thoden übertragen werden, beispielsweise mittels einer reibschlüssigen Verbindung, z. B. Klemmschrauben, mittels Formschluss, z. B. Passschrauben, Bolzen zur Übertragung der Scherkräfte, einer Verrasterung, einer Verzahnung, mittels einer Nietverbindung, oder durch Adhäsion/Kohäsion (Kleben). Eine Verbindung der Schenkel durch Kleben mit dem Mittelteil bietet den besonderen Vorteil, dass das Material keine thermisch induzierten Spannungen erhält oder lokale Spannungserhöhungen durch die Verschraubung. Das Mittelteil des Vier-punktlenkers kann aus einem Rundmaterial oder einem beliebig anderen Formmaterial be-stehen.

Folglich soll die Erfindung nicht auf die offenbarten Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Lageraufnahme
- 2: Pratze
- 30: Vierpunktlenker
- 31: Mittelteil
- 32: Schenkel
- 32A, 32B: Erster, zweiter Lenkerarm
- 33, 34: Profilkanten
- 35: Mittelbereich des Mittelteils
- 36: Endbereich des Mittelteils
- 37: Diagonalsteg
- 38: Quersteg
- 39: Profilvertiefung
- 40: Vierpunktlenker
- 41: Mittelteil
- 42: Schenkel
- 42A, 42B: Erster, zweiter Lenkerarm
- 43,44: Profilkanten
- 45: Dreieckförmige Profilvertiefung
- 50: Vierpunktlenker
- 51: Mittelteil
- 52: Schenkel
- 52A, 52B: Erster, zweiter Lenkerarm
- 53,54: Profilkanten
- 60: Vierpunktlenker
- 61: Mittelteil
- 62: Schenkel
- 62A, 62B: Erster, zweiter Lenkerarm
- 70: Vierpunktlenker
- 71: Mittelteil
- 72: Schenkel
- 72A, 72B: Erster, zweiter Lenkerarm
- 73: Hohlbohrung
- 80: Vierpunktlenker
- 81: Mittelteil
- 82: Schenkel
- 82A, 82B: Erster, zweiter Lenkerarm
- 83,84: Profilkanten
- 85: Schweißnaht
- 86: Verbindungsbereich der Schenkel
- 90: Vierpunktlenker
- 91: Mittelteil
- 92: Schenkel
- 92A, 92B: Erster, zweiter Lenkerarm
- 95: Klebestelle
- 100: Vierpunktlenker
- 101: Mittelteil
- 102: Schenkel
- 102A, 102B: Erster, zweiter Lenkerarm
- 105: Durchmesservergrößerung
- 106: Schweißnaht
- 107: Flanschfläche
- 108: Verschraubung
- 110: Vierpunktlenker
- 111: Mittelteil
- 112: Schenkel
- 112A, 112B: Erster, zweiter Lenkerarm
- 115, 116: Teilstücke des Mittelteils
- 120: Vierpunktlenker
- 121: Mittelteil
- 122: Schenkel
- 122A, 122B: Erster, zweiter Lenkerarm
- 123,124: Profilkanten
- 125: Hohlzylinderförmiges Mittelstück
- 126: Durchmesservergrößerung
- 127: Verzahnung
- 128: Anschlussbereich der Schenkel
- 129: Verschraubung
- 130: Vierpunktlenker
- 131: Mittelteil
- 132: Schenkel
- 132A, 132B: Erster, zweiter Lenkerarm
- 135: Geschlossener Hohlraum
- 136: Verbindungsbereich

## Patentansprüche

1. Vierpunktlenker (30; 40; 50; 60; 70; 80: 90; 100; 110; 120; 130) zur Anbindung einer Fahrzeugstarrachse an einem Fahrzeugrahmen eines Fahrzeugs, insbesondere eines Nutzfahrzeugs, mit vier durch einen Zentralbereich fest miteinander verbundenen und sich von dem Zentralbereich (Z) wegerstreckenden Lenkerarmen, von denen zwei erste Lenkerarme an dem Fahrzeugrahmen und zwei zweite Lenkerarme an der Fahrzeugachse anlenkbar sind, **dadurch gekennzeichnet, dass** am Zentralbereich (Z) eine Sollversagungsstelle vorgesehen ist.

2. Vierpunktlenker nach Anspruch 1, **dadurch gekennzeichnet, dass** die Sollversagungsstelle als Sollbruchstelle ausgebildet ist.

3. Vierpunktlenker (30; 40; 50; 60; 70; 80: 90; 100; 110; 120; 130) nach Anspruch 1 oder 2, **dadurch gekennzeichnet, dass** der Zentralbereich (Z) als Mittelteil ausgeführt ist, an dessen beiden Enden je ein Schenkel im Wesentlichen senkrecht zum Mittelteil drehfest angeordnet ist, wobei ein erster Abschnitt der Schenkel jeweils durch einen der ersten Lenkerarme und ein zweiter Abschnitt der Schenkel jeweils durch einen der zweiten Lenkerarme gebildet werden.

4. Vierpunktlenker nach Anspruch 3, **dadurch gekennzeichnet,** (a) dass das Mittelteil (31; 41; 51; 61; 71; 81; 91; 101; 111; 121; 131) stabförmig, zylinderförmig, stangenförmig, rohrförmig und/oder als Profilstück ausgeführt ist; und/oder (b) dass das Mittelteil gekröpft ausgeführt ist und die Sollversagungsstelle an der Kröpfung vorgesehen ist.

5. Vierpunktlenker nach einem der vorhergehenden Ansprüche 2 bis 4, **dadurch gekennzeichnet;**
(a) **dass** der Zentralbereich aus einem Kunststoff oder zumindest teilweise aus einem Kunststoff gefertigt ist, wobei der Kunststoff vorzugsweise ein glasfaser- oder kohlenstofffaserverstärkter Kunststoff ist; und/oder
(b) **dass** in den Zentralbereich zur Ausbildung der Sollbruchstelle mindestens eine Kerbe eingebracht ist; und/oder
(c) **dass** in den Zentralbereich zur Ausbildung der Sollbruchstelle mindestens eine Stelle erhöhter Materialspannung vorgesehen ist.

6. Vierpunktlenker (100; 110) nach einem der vorhergehenden Ansprüche 3 bis 5, **dadurch gekennzeichnet, dass** das Mittelteil (101; 111) aus zwei Teilen besteht, die an einer Verbindungsstelle drehfest miteinander verbunden sind, wobei zur Ausbildung der Sollversagungsstelle an der Verbindungsstelle die Verbindung zwischen den beiden Teilen so ausgelegt ist, dass eine Überschreitung eines vorgegebenen Schwellwerts einer Krafteinwirkung auf die Verbindungsstelle eine Verdrehung der beiden Teile des Mittelteils bewirkt.

7. Vierpunktlenker (100; 110) nach Anspruch 6, **dadurch gekennzeichnet, dass** die zwei Teile des Mittelteils jeweils eine Flanschfläche (106, 107) aufweisen, die mit einer Niet- oder Schraubverbindung (108) drehfest verbunden sind, wobei die Stärke der Schrauben oder Nieten so ausgelegt ist, dass sie bei Überschreitung des Schwellwerts versagen.

8. Vierpunktlenker nach einem der vorhergehenden Ansprüche, **dadurch gekennzeichnet, dass** die Lenkerarme so ausgeführt sind, dass eine im montierten Zustand des Vierpunktlenkers der Fahrbahn zugewandte Seite der Lenkerarme eine bessere schlagdämpfende Eigenschaften aufweist als eine der Fahrbahn abgewandte Seite der Lenkerarme.

9. Vierpunktlenker nach Anspruch 8, **dadurch gekennzeichnet,**
(a) **dass** die der Fahrbahn zugewandte Seite der Lenkerarme mit einer Gummibeschichtung versehen ist; und/oder
(b) **dass** die der Fahrbahn zugewandte Seite der Lenkerarme aus einem Material mit höherer Duktilität, insbesondere mit einem duktilen Stahl, als die der Fahrbahn abgewandte Seite gebildet ist.

10. Vierpunktlenker nach einem der vorhergehenden Ansprüche 3 bis 9, **dadurch gekennzeichnet,**
(a) **dass** das Mittelteil (121) über eine formschlüssige Verbindung, vorzugsweise eine Verzahnung (127), mit den Schenkeln (122) verbunden ist, wobei die formschlüssige Verbindung zusätzlich über eine Niet- oder Schraubverbindung (129) gesichert ist; oder
(b) **dass** das Mittelteil (81; 101) stoffschlüssig mit den Schenkeln (82; 102) verbunden ist, vorzugweise durch Kleben oder Schweißen; oder
(c) **dass** das Mittelteil (31; 41; 51; 61; 71; 111) endseitig einstückig mit dem entsprechenden Schenkeln verbunden ist.

11. Vierpunktlenker nach einem der vorhergehenden Ansprüche 3 bis 9, **dadurch gekennzeichnet, dass** der Vierpunktlenker (30; 40; 50; 60; 70) einteilig ausgeführt ist,
(a) wobei das Mittelteil (51) als geschlossenes Rohr ausgeführt ist und die Schenkel (52) ein zur Seite hin offenen Profil aufweisen; oder
(b) wobei das Mittelteil (61) und die Schenkel (62) aus Vollmaterial gebildet sind; oder
(c) wobei das Mittelteil (31; 41) eine nach unten und/oder oben offene Profilstruktur aufweist.

12. Vierpunktlenker nach einem der vorhergehenden Ansprüche, **dadurch gekennzeichnet, dass** an den Lenkerarmen Lageraufnahmen (1) befestigt sind, die versteift ausgeführt sind.

13. Achsaufhängung für eine gelenkte Starrachsen in Fahrzeugen, insbesondere Nutzfahrzeugen, umfassend einen Vierpunktlenker nach einem der vorhergehenden Ansprüche.

14. Fahrzeug, insbesondere Nutzfahrzeug, mit einem Vierpunktlenker nach einem der Ansprüche 1 bis 12 oder einer Achsaufhängung nach Anspruch 13.

## Claims

1. Four-point link (30; 40; 50; 60; 70; 80; 90; 100; 110; 120; 130) for attaching a rigid vehicle axle to a vehicle chassis of a vehicle, in particular a commercial vehicle, having four link arms, which are fixedly connected to one another by a central region and extend away from the central region (Z), of which two first link arms are attachable to the vehicle chassis in an articulated manner and two second link arms are attachable to the vehicle axle in an articulated manner, **characterized in that** a predetermined failure point is provided in the central region (Z).

2. Four-point link according to Claim 1, **characterized in that** the predetermined failure point is configured as a predetermined breaking point.

3. Four-point link (30; 40; 50; 60; 70; 80; 90; 100; 110; 120; 130) according to Claim 1, **characterized in that** the central region (Z) is embodied as a central part, at each of the two ends of which a limb is non-rotatably mounted substantially perpendicularly to the central part, wherein a first portion of the limbs is formed in each case by one of the first link arms and a second portion of the limbs is formed in each case by one of the second link arms.

4. Four-point link according to Claim 3, **characterized**
(a) **in that** the central part (31; 41; 51; 61; 71; 81; 91; 101; 111; 121; 131) is rod-shaped, cylindrical, bar-shaped, tubular and/or embodied as a profile; and/or
(b) **in that** the central part is embodied in a cranked manner and the predetermined failure point is provided at the crank.

5. Four-point link according to one of the preceding Claims 2 to 4, **characterized**
(a) **in that** the central region is manufactured from a plastics material or at least partially from a plastics material, wherein the plastics material is preferably a glass-fibre-reinforced or carbon-fibre-reinforced plastics material; and/or
(b) **in that** at least one notch has been introduced into the central region to form the predetermined breaking point; and/or
(c) **in that** at least one point of increased material tension has been introduced into the central region to form the predetermined breaking point.

6. Four-point link (100; 110) according to one of the preceding Claims 3 to 5, **characterized in that** the central part (101; 111) consists of two parts which are connected to one another for conjoint rotation at a connection point, wherein, to form the predetermined failure point at the connecting point, the connection between the two parts is designed such that if a predetermined threshold of force introduction at the connecting point is exceeded, this causes the two parts of the central part to twist.

7. Four-point link (100; 110) according to Claim 6, **characterized in that** the two parts of the central part each have a flange surface (106, 107), which are connected for conjoint rotation by means of a riveted or screwed joint (108), wherein the strength of the screws or rivets is designed such that they fail if the threshold is exceeded.

8. Four-point link according to one of the preceding claims, **characterized in that** the link arms are embodied such that a side of the link arms that faces the roadway in the mounted state of the four-point link has better impact-damping properties than a side of the link arms that faces away from the roadway.

9. Four-point link according to Claim 8, **characterized**
(a) **in that** that side of the link arms that faces the roadway is provided with a rubber coating; and/or
(b) **in that** that side of the link arms that faces the roadway is formed from a material of higher ductility than the side facing away from the roadway, in particular using a ductile steel.

10. Four-point link according to one of the preceding Claims 3 to 9, **characterized**
(a) **in that** the central part (121) is connected to the limbs (122) by a form-fitting connection, preferably toothing (127), wherein the form-fitting connection is additionally secured by means of a riveted or screwed connection (129); or
(b) **in that** the central part (81; 101) is cohesively connected to the limbs (82; 102), preferably by adhesive bonding or welding; or
(c) **in that** the central part (31; 41; 51; 61; 71; 111) is integrally connected to the corresponding limbs at its ends.

11. Four-point link according to one of the preceding Claims 3 to 9, **characterized in that** the four-point link (30; 40; 50; 60; 70) is embodied in one piece,
(a) wherein the central part (51) is embodied as a closed tube and the limbs (52) have a profile that is open to the side; or
(b) wherein the central part (61) and the limbs (62) are formed from solid material; or
(c) wherein the central part (31; 41) has a downwardly open and/or upwardly open profile structure.

12. Four-point link according to one of the preceding claims, **characterized in that** bearing receptacles (1) which are embodied in a stiffened manner are fastened to the link arms.

13. Axle suspension for a steered rigid axle in vehicles, in particular commercial vehicles, comprising a four-point link according to one of the preceding claims.

14. Vehicle, in particular commercial vehicle, having a four-point link according to one of Claims 1 to 12 or an axle suspension according to Claim 13.

## Revendications

1. Bielle à quatre points (30 ; 40 ; 50 ; 60 ; 70 ; 80 ; 90 ; 100 ; 110 ; 120 ; 130) pour raccorder un essieu rigide de véhicule à un châssis de véhicule d'un véhicule, notamment d'un véhicule utilitaire, avec quatre bras de bielle reliés fixement entre eux par une région centrale et s'écartant de la région centrale (Z), parmi lesquels deux premiers bras de bielle peuvent être articulés au niveau du châssis de véhicule et deux deuxièmes bras de bielle peuvent être articulés à l'essieu de véhicule, **caractérisée en ce qu'**un point de défaillance théorique est prévu au niveau de la région centrale (Z).

2. Bielle à quatre points selon la revendication 1, **caractérisée en ce que** le point de défaillance théorique est réalisé sous la forme d'un point de rupture théorique.

3. Bielle à quatre points (30 ; 40 ; 50 ; 60 ; 70 ; 80 ; 90 ; 100 ; 110 ; 120 ; 130) selon la revendication 1 ou 2, **caractérisée en ce que** la région centrale (Z) est réalisée sous la forme d'une partie centrale au niveau des deux extrémités de laquelle un côté est disposé fixement en rotation pour l'essentiel respectivement perpendiculairement à la partie centrale, une première section du côté étant respectivement formée par un des premiers bras de bielle et une deuxième section du côté est respectivement formée par un des deuxièmes bras de bielle.

4. Bielle à quatre points selon la revendication 3, **caractérisée en ce que** :
(a) la partie centrale (31 ; 41 ; 51 ; 61 ; 71 ; 81 ; 91 ; 101 ; 111 ; 121 ; 131) est réalisée en forme de tige, en forme de cylindre, en forme de barre, en forme de tube et/ou sous la forme d'une pièce profilée ; et/ou
(b) la partie centrale est réalisée de façon coudée et le point de défaillance théorique est prévu au niveau du coude.

5. Bielle à quatre points selon l'une quelconque des revendications précédentes 2 à 4, **caractérisée en ce que** :
(a) la région centrale est fabriquée à partir d'une matière plastique ou au moins en partie à partir d'une matière plastique, la matière plastique étant de préférence une matière plastique renforcée en fibres de verre ou de carbone ; et/ou
(b) au moins une entaille est amenée dans la région centrale pour former le point de rupture théorique ; et/ou
(c) au moins un point de tension accrue de matière est prévu dans la région centrale pour former le point de rupture théorique.

6. Bielle à quatre points (100 ; 110) selon l'une quelconque des revendications précédentes 3 à 5, **caractérisée en ce que** la partie centrale (101 ; 111) se compose de deux parties reliées solidairement en rotation entre elles au niveau d'un point de jonction, la jonction entre les deux parties étant conçue de telle sorte que pour former le point de défaillance théorique au niveau du point de jonction, un dépassement d'une valeur seuil prédéfinie d'une action de force sur le point de jonction provoque une torsion des deux parties de la partie centrale.

7. Bielle à quatre points (100 ; 110) selon la revendication 6, **caractérisée en ce que** les deux parties de la partie centrale comportent respectivement une surface de flasque (106, 107) reliée solidairement en rotation à une liaison rivetée ou vissée (108), l'épaisseur des vis ou des rivets étant conçue de façon à lâcher en cas de dépassement de la valeur seuil.

8. Bielle à quatre points selon l'une quelconque des revendications précédentes, **caractérisée en ce que** les bras de bielle sont réalisés de telle sorte qu'à l'état monté de la bielle à quatre points, le côté des bras de bielle orienté vers la voie de roulement présente de meilleures propriétés d'amortissement des coups qu'un côté des bras de bielle opposé à la voie de roulement.

9. Bielle à quatre points selon la revendication 8, **caractérisée en ce que** :
(a) le côté des bras de bielle orienté vers la voie de roulement est pourvu d'un revêtement en caoutchouc ; et/ou
(b) le côté des bras de bielle orienté vers la voie de roulement est formé à partir d'un matériau, notamment d'un acier ductile, à la ductilité plus importante que le côté opposé à la voie de roulement.

10. Bielle à quatre points selon l'une quelconque des revendications précédentes 3 à 9, **caractérisée en ce que** :
(a) la partie centrale (121) est reliée aux côtés (122) via une liaison réalisée par complémentarité de formes, de préférence un endentement (127), la liaison réalisée par complémentarité de formes étant en outre sécurisée par une jonction rivetée ou vissée (129) ; ou
(b) la partie centrale (81 ; 101) est reliée par complémentarité de matières aux côtés (82 ; 102), de préférence par collage ou soudure ; ou
(c) la partie centrale (31 ; 41 ; 51 ; 61 ; 71 ; 111) est reliée d'un seul tenant, du côté d'extrémité, aux côtés correspondants.

11. Bielle à quatre points selon l'une quelconque des revendications précédentes 3 à 9, **caractérisée en ce que** la bielle à quatre points (30 ; 40 ; 50 ; 60 ; 70) est réalisée d'un seul tenant :
(a) la partie centrale (51) étant réalisée sous la forme d'un tube fermé et le côté (52) comportant un profilé ouvert vers le côté ; ou
(b) la partie centrale (61) et le côté (62) étant formés à partir d'une matière pleine ; ou
(c) la partie centrale (31 ; 41) comportant une structure de profilé ouverte vers le bas et/ou vers le haut.

12. Bielle à quatre points selon l'une quelconque des revendications précédentes, **caractérisée en ce que** des logements de palier (1) sont fixés aux bras de bielle, lesdits logements étant réalisés de façon renforcée.

13. Suspension d'essieu pour un essieu rigide articulé dans des véhicules, notamment des véhicules utilitaires, comprenant une bielle à quatre points selon l'une quelconque des revendications précédentes.

14. Véhicule, notamment véhicule utilitaire, avec une bielle à quatre points selon l'une quelconque des revendications 1 à 12 ou une suspension d'essieu selon la revendication 13.
